# EUROPÄISCHE PATENTSCHRIFT

(11) **EP 1 942 741 B1**
(45) Veröffentlichungstag und Bekanntmachung des Hinweises auf die Patenterteilung: **03.06.2015**
(21) Anmeldenummer: 06818504.0
(22) Anmeldetag: 01.11.2006
(51) Int. Cl.: A01P 3/00, A01N 63/04

(54) **ZUSAMMENSETZUNG UND VERFAHREN ZUR VERHINDERUNG VON DURCH VERTICILLIUM VERURSACHTEN PFLANZENSCHÄDEN**
COMPOSITION AND METHOD FOR THE PREVENTION OF PLANT DAMAGE CAUSED BY VERTICILLIUM
COMPOSITION ET PROCEDE DESTINES A PROTEGER DES PLANTES CONTRE DES DEGATS CAUSES PAR VERTICILLIUM

(30) Priorität: 04.11.2005 DE 102005053458
(43) Veröffentlichungstag der Anmeldung: 16.07.2008
(73) Patentinhaber: Leibniz-Zentrum für Agrarlandschaftsforschung (ZALF) e.V., 15374 Müncheberg (DE)
(72) Erfinder: LENTZSCH, Peter, 15370 Petershagen (DE); GOLLDACK, Judith, 15370 Petershagen (DE); SCHWAERZEL, Hilmar, 15374 Müncheberg (DE); SCHUBERT, Peter, 15345 Eggersdorf (DE)
(74) Vertreter: Elbel, Michaela
(86) Internationale Anmeldenummer: PCT/EP2006/010877
(87) Internationale Veröffentlichungsnummer: WO 2007/051654

(56) Entgegenhaltungen:
- EP-A- 0 470 287
- WO-A1-2005/104853
- WO-A2-03/000050
- US-A1- 2001 046 485
- TANG M ET AL: "Elicitor induced defence responses in medicago sativa" NEW PHYTOLOGIST, Bd. 149, Nr. 3, März 2001 (2001-03), Seiten 401-418, XP002423070 ISSN: 0028-646X
- CASTREJON SANGUINO A ET AL: "INDUCED RESISTANCE I. RESISTANCE TO VERTICILLIUM-DAHLIAE RACE T-9 IN COTTON GOSSYPIUM-HIRSUTUM L. VARIETY COKER 310 INDUCED BY VERTICILLIUM-ALBO-ATRUM IN GREENHOUSE CONDITIONS" REVISTA MEXICANA DE FITOPATOLOGIA, Bd. 6, Nr. 2, 1988, Seiten 177-179, XP009079955 ISSN: 0185-3309

## Beschreibung

### Hintergrund der Erfindung

Die Erfindung betrifft eine Zusammensetzung zur Reduktion und/oder Verhinderung von durch *Verticillium* sp. verursachten Schäden an einer Pflanze, wobei die Zusammensetzung als aktiven Bestandteil eine wirksame Menge an *Verticillium* sp. aufweist und *Verticillium* sp. ein apathogener Stamm und ein temperaturabhängig pathogener Stamm ist und wobei mindestens 2 *Verticillium* Stämme kombiniert werden. Ferner betrifft die Erfindung ein Verfahren zur Reduktion und/oder Verhinderung von durch *Verticillium* sp. verursachten Schäden an einer Pflanze sowie die Verwendung von *Vorticillium* sp.

Der Pilz *Verticillium* sp. verursacht an verschiedenen Nutz- und Zierpflanzen Welkeerscheinungen, die zu Ertragsverlust führen. Aufgrund des großen ökonomischen Schadens, der jedes Jahr durch *Verticillium* bedingten Ernteausfall hervorgerufen wird, wurden verschiedene Strategien zur Bekämpfung von *Verticillium* entwickelt.

Um das schädigende Potenzial von *Verticillium* einzugrenzen beschreibt die EP 1 326 494 B1 aus Bakterien isolierte Pseudomycine, die in der Behandlung von Pflanzen, die durch pathogene Pilze befallen sind, wirksam sind. Insbesondere beschreibt die EP 1 326 494 B1 die Therapie von mit *Verticillium dahliae* befallenen Baum- und Getreidespezies durch Pseudomycine.

Die DE 199 28 690 A1 beschreibt ein Rhizobakterienisolat, das aus Streptomyces rhimosus gewonnen wird sowie dessen Pflanzen stärkende und fungizide Eigenschaften. Das Bakterlenisolat zeigt eine Erhöhung der Widerstandskraft der Pflanzen gegenüber verschiedenen bodenbürtigen Pilzen, u.a. *Verticillium* sp.

Von *Verticillium* ist ferner bekannt, dass es in Form von pathogenen und apathogenen Stämmen vorkommt. Die WO 02/097131 A1 beschreibt molekularbiologische Methoden zur DNA Isolierung aus verschiedenen Pflanzenproben sowie PCR basierte DNA Amplifikation, um pathogene von apathogenen Stämmen zu unterscheiden.

Daneben wurde versucht, *Verticillium* Befall, insbesondere *Verticillium* Welke von Erdbeeren mit einem hohen Mikrosklerotien Gehalt im Boden zu korrelieren. *Verticillium* spezifische DNA wurde in Böden nachgewiesen, um Prognosen über Schäden an Pflanzen der nächsten Generation aufzustellen. Dabei zeigte sich, dass ohne Kenntnis der *Verticillium* Pathogenität die im Boden vorhandenen Mikrosklerotien keine sichere Schadensprognose erlauben. Das quantitative Vorkommen von *Verticillium* DNA in Böden bedeutet umgekehrt nicht, dass entsprechende Schäden an Pflanzen auftreten. Es wurden verschiedene Untersuchungen angestellt, bakterielle Flüssig- und Festphasenpräparate zur Vermeidung von *Verticillium* verursachten Schäden einzusetzen. Das Bodenmikrohabitat ist durch Bakterien beeinflussbar, erfordert aber eine turnusmäßige Zuführung von Bakterien, um einen nachhaltigen Effekt zu bewirken.

Nachteilig am Stand der Technik ist, dass sowohl biologische als auch chemische Fungizide auf den Boden bzw. die Pflanzen aufgebracht werden müssen, was einerseits die Pflanzen belastet, anderseits zusätzliche Arbeitsschritte und damit Kosten erfordert. Ferner existiert weder in Deutschland noch in der Europäischen Union eine zugelassene Bekämpfung mittels chemischer Pflanzenschutzmittel gegen *Verticillium* an der Erdbeere.

### Zugrunde liegende Aufgabe

Der Erfindung liegt die Aufgabe zugrunde, einen wirksamen Schutz gegen *Verticillium* Befall von Pflanzen vorzuschlagen, der den Einsatz von extern zugegebenen Fungiziden vermeidet. Außerdem soll ein wirksamer Schutz auf biologischer, nicht chemischer Basis vorgeschlagen werden.

### Erfindungsgemäße Lösung

Die Erfinder der vorliegenden Erfindung haben überraschend festgestellt, dass sich bestimmte *Verticillium* Stämme selbst eignen, den *Verticillium* Befall von Nutzpflanzen durch pathogene Stämme zu reduzieren und/oder zu verhindern. Ohne durch irgendeine Theorie gebunden zu sein, nehmen die Erfinder an, dass die spezifischen *Verticillium* Stämme mit den pathogenen, im Boden und standortbürtigen *Verticillium* Stämmen in Wechselwirkung treten und die spezifischen *Verticillium* Stämme die natürlich vorkommenden überlagern oder verdrängen.

Die Aufgabe wird erfindungsgemäß durch eine Zusammensetzung zur Reduktion und/oder Verhinderung von durch *Verticillium* sp. verursachten Schäden an einer Pflanze gelöst, wobei die Zusammensetzung als aktiven Bestandteil eine wirksame Menge an *Verticillium* sp. aufweist und *Verticillium* sp. ein apathogener Stamm und ein temperaturabhängig pathogener Stamm ist und wobei mindestens 2 *Verticillium* Stämme kombiniert werden. Besonders geeignet ist *Verticillium dahliae, Verticillium longisporum* und *Verticillium albo-atrum.*

Es werden mindestens zwei *Verticillium* Stämme in der Zusammensetzung kombiniert. Apathogene Stämme sind *Verticillium* Stämme, die unter den untersuchten Bedingungen keine schädigende Wirkung auf Pflanzen haben. Die Kombination umfasst mindestens einen apathogenen und mindestens einen temperaturabhängig pathogenen Stamm. Die Kombination verschiedener Stämme besitzt den Vorteil, dass die Schutzwirkung auf die Pflanze erhöht wird.

In einer weiteren Ausführungsform wird für den Einsatz auf Standorten mit einer mittleren Bodentemperatur kleiner als ca, 15°C mindestens ein temperaturabhängig pathogener *Verticillium* Stamm gewählt, der bei niedrigen Temperaturen apathogen, bei höheren Temperaturen jedoch pathogen ist. Auf diese Weise wird die Bekämpfung von pathogenen, Im Boden vorkommenden Stämmen, die auch temperaturunabhängig sein können, möglich. Beispiele sind die Isolate Nr. 784 und 800.

In einer alternativen Ausführungsform wird für Standorte mit einer mittleren Bodentemperatur von ca. 15°C bis ca. 21°C mindestens ein temperaturabhängig pathogener *Verticillium* Stamm gewählt, der bei niedrigen Temperaturen pathogen und bei höheren Temperaturen apathogen ist. Besonders geeignet sind die Stämme 292 und 806.

Für Standorte mit einer mittleren Bodentemperatur von über ca. 21°C sind insbesondere die Stämme 27, 337 und 840 geeignet.

In einer weiteren Ausführungsform werden die Isolate Nr. 806 (= Hinterlegungsnummer: DSM 17662), 784 (= Hinterlegungsnummer: DSM 17661) und 337 (= Hinterlegungsnummer: DSM 17660) bevorzugt verwendet.

Insgesamt berücksichtigt die Auswahl die genetische Ähnlichkeit der Isolate, die zueinander möglichst unähnlich sein sollten. Die Erfinder gehen davon aus, dass es für möglichst unähnliche Isolate am wahrscheinlichsten ist, eine Pflanze gemeinsam zu besiedeln, weil die ökologischen Ansprüche der Stämme so unterschiedlich ausgeprägt sind.

In einer weiteren Ausführungsform enthält die Zusammensetzung einen pflanzlich verträglichen Träger- und/oder Hilfsstoff, der insbesondere Stroh sein kann. Als besonders vorteilhaft insbesondere für Erdbeerpflanzen hat sich Weizenstroh erwiesen.

Das Stroh kann vorzugsweise autoklaviert sein. Das Autoklavieren tötet konkurrierende Mikroorganismen und schließt Nährstoffe auf, so dass die Anzuchtzeit verkürzt werden kann. Das Strohpräparat ist ohne Einschränkung der Wirksamkeit ca. 4 Wochen lagerbar, was mehrfach bei 4°C erprobt wurde.

In einer weiteren Ausführungsform beträgt die wirksame Menge des verwendeten *Verticillium* Stammes ca. 5 g Stroh-Inokulum pro Pflanzloch bei der Pflanzung pro Pflanze.

In einer alternativen Ausführungsform beträgt die wirksame Menge ca. 135 g Stroh-Inokulum je m² und ca. 10 cm Einfrästiefe bei Flächenimpfung vor der Pflanzung.

Beispielsweise können Erdbeerpflanzen Ende Mai, unter relativ warmen Bodenverhältnissen ausgepflanzt werden. Beimpft werden diese Pflanzen mit einem temperaturabhängig pathogenen *Verticillium* Stamm, der unter Kälte Schäden verursacht, unter Wärme jedoch zur Vitalitätssteigerung beiträgt. Für die flächige Einarbeitung in den Boden wird beimpftes Stroh, vorzugsweise Weizenstroh verwendet. Zur Absicherung der Wirkung kann zusätzlich ein weiterer *Verticillium* Stamm verwendet werden, der beispielsweise im gesamten Temperaturspektrum apathogen ist. Sollte der Standort stark vorbelastet sein, sind Mehrfachkombinationen aus genetisch wenig verwandten weiteren *Verticillium* Stämmen möglich. Weiterhin kann die Beimpfung von Vermehrungspflanzen zur Etablierung des *Verticilliums* in der Pflanze den Aufwand vor Ort senken und das Wirkungsprinzip sichern.

In einer weiteren bevorzugten Ausführungsform ist die Pflanze eine Nutzpflanze, insbesondere Erdbeere, Raps, Aubergine, Paprika, Tomate, Olive, Gurke, Baumwolle, Kartoffel, Minze, Luzerne und/oder Hopfen. Besonders bevorzugt ist die Erdbeere und die Olive.

In einer alternativen Ausführungsform ist die Pflanze ein Ziergehölz oder Forstgehölz, insbesondere Feld-Ahorn (lat. Acer campestre), Spitz-Ahorn (lat. Acer platanoides), Berg-Ahorn (lat. Acer pseudoplatanus), Trompetenbaum (lat. Catalpa bignonioides). Perückenstrauch (lat. Cotinus coggygria), falsche Akazie bzw. Robinie (lat. Robinia pseudoacacia), Hundsrose (lat. Rosa canina), Flieder (lat. Syringa vulgaris) und/oder Linde (lat. Tilia cordata).

Daneben betrifft die vorliegende Erfindung ein Verfahren zur Reduktion und/oder Verhinderung von durch *Verticillium* sp. verursachten Schäden an einer Pflanze, umfassend
a) Bestimmen der mittleren Bodentemperatur;
b) Auswählen einer Zusammensetzung enthaltend mindestens einen apathogenen und mindestens einen temperaturabhängig pathogenen Stamm von *Verticillium* sp. in Abhängigkeit von der mittleren Bodentemperatur;
c) Aufbringen der Zusammensetzung auf zu behandelndes pflanzliches Material; und gegebenenfalls
d) Ausbringen des inokulierten pflanzlichen Materials.

Das Verfahren besitzt insbesondere den Vorteil, dass neben *Verticillium,* das an sich bereits im Boden vorhanden ist, keine Fungizide in den Boden eingeführt werden müssen. Alle zur Anwendung kommenden Isolate sind prinzipiell an den Standorten bzw. in der Region vorhanden und stellen somit keine Einführung von Exoten dar.

Besonders vorteilhaft kann das pflanzliche Material ausgewählt sein aus der Gruppe bestehend aus Saatgut, Setzlingen, Stecklingen, Keimlingen, Meristem-vermehrtem Pflanzgut, adulten Pflanzen und Pflanzen aus in vitro Gewebekultur.

Daneben betrifft die Erfindung die Verwendung von *Verticillium* sp. zur Reduktion und/oder Verminderung von durch *Verticillium* sp. verursachten Schäden an einer Pflanze, wobei mindestens ein apathogener Stamm und mindestens ein temperaturabhängig pathogener Stamm kombiniert werden.

### Kurzbeschreibung der Figuren

Die Erfindung wird im Folgenden detaillierter beschrieben unter Bezugnahme auf die beigefügten Figuren, in denen
- Fig. 1a: die Standorte der Erdbeer-Produktionsbetriebe, an denen Boden- und Pflanzenproben entnommen wurden, zeigt; Fig. 1b die Häufigkeit der Besiedelung vitaler und geschädigter Erdbeerpflanzen mit den genetischen Subtypen (1-13) von *Verticillium dahliae* zeigt;
- Fig. 2: ein Dendrogramm der Ähnlichkeitsanalyse von RAPD-PCR-Fingerprints von 421 *Verticillium dahliae* Isolaten zeigt;
- Fig. 3: die Wirkung verschiedener *Verticillium* Isolate auf die Vitalität von Erdbeer-Ausläuferpflanzen unter verschiedenen Klimabedingungen zeigt;
- Fig. 4: den prozentualen Anteil grüner Blätter 14 Tage nach Beimpfung mit *Verticillium* Stämmen, dargestellt als Abweichung vom Kontrollniveau, zeigt;
- Fig. 5: einen Parzellenversuch zur Wirkung von antagonistischen, bakteriellen Präparaten auf die Schädigung von Erdbeerpflanzen nach Beimpfung mit verschiedenen *Verticillium* Stämmen zeigt; sowie
- Fig. 6: einen Parzellenversuch zur Kombinationswirkung verschiedener *Verticillium* Stämme auf den Schadensverlauf bei Erdbeerpflanzen, im Vergleich zu Kontrollen mit und ohne Strohzusatz zeigt.

Im Folgenden werden konkrete Ausführungsbeispiele und Versuche detailliert beschrieben.

### Detaillierte Beschreibung von Ausführungsbeispielen

### 1. Bewertung der Pflanzenschäden

Die Schädigung an der Pflanze wird an Hand der Welkesymptome beurteilt. Dazu gibt es ein Boniturschema (Büttner, 1985, Untersuchungen zur Methodik der *Verticillium* Resistenzzüchtung und zu züchterischen Möglichkeiten für die Schaffung einer Ausgangsbasis für die Erdbeerzüchtung der DDR. Insitut für Obstforschung Dresden-Pillnitz, 48 S.), welches von den Boniturnoten 1 (= abgestorbene Pflanze) bis 9 (= vitale Pflanze) reicht. Die Welkesymptome sind gut von anderen Schäden unterscheidbar. Typischerweise tritt die Welke an den ältesten Blätter auf und schreitet von außen nach innen bis zu einem nekrotischen Endstadium fort.

### 2. Standortverteilung von Verticillium und Schadensausprägung

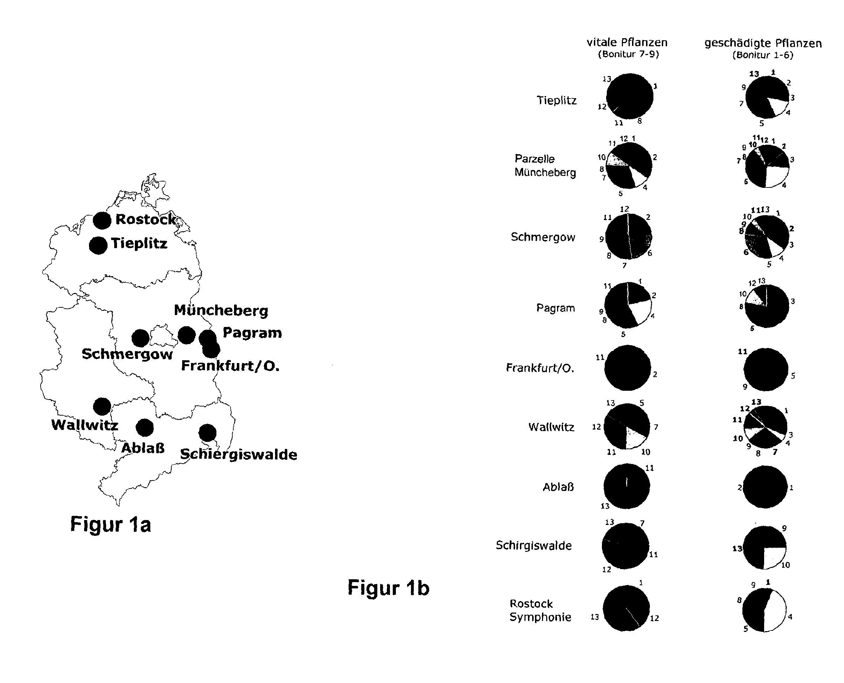

An den verschiedenen Standorten wurde gezeigt, dass vitale Pflanzen den Schadpilz *Verticillium* ebenso enthalten wie stark geschädigte Pflanzen (Figur 1a und 1b). Vergleicht man an einem Standort die Besiedlung, sind in vitalen Pflanzen andere Subtypen als bei geschädigten vorhanden. Diese Subtypen sind aber nicht apathogen, wie der Vergleich mit anderen Standorten zeigt, wo diese Subtypen in geschädigten Pflanzen vorkommen. Eine Tendenz ist an allen Standorten beobachtbar: die geschädigten Pflanzen werden durch mehr Subtypen besiedelt als die vitalen. Dabei sind die Faktoren, die zu einer Schadensausprägung führen, bisher unbekannt. International untersucht werden Bewirtschaftungsvarianten, die Wirkung antagonistischer mikrobieller Präparate, Zusatz verschiedener Substanzen (z.B. Pflanzenwuchsstoffe, wie Gibberillin) und Resistenzinduktoren. Mikrobielle, antagonistisch wirksame Präparate wurden in Müncheberg in Parzellenexaktversuchen vergleichend analysiert, ohne einen wirtschaftlich verwertbaren Erfolg auf diesem Standort (Wirkung im Bereich von 5 %) zu erzielen.

### 3. Bodeneigenschaften und Schadensausprägung

Es wurden Bodeneigenschaften unter vitalen und geschädigten Pflanzen analysiert. Zum Vergleich wurde Boden ohne Pflanzenbewuchs untersucht. Bewachsener und unbewachsener Boden unterschied sich in den Textur- und bodenchemischen Parametern nicht. Das C/N-Verhältnis ist auf allen Böden nahezu 10:1. Zum einen bedeutet dies eine eher pilzlich dominierte Bodenflora (>10:1 pilzlich dominiert, 4-6:1 bakteriell dominiert) und zum anderen, dass Stickstoff freigesetzt werden kann (< 27:1). Die niedrigsten C, C_{org} und N-Werte sind im Boden der Parzelle zu finden (Tab. 1), entsprechend ist die mikrobielle Aktivität hier auch am geringsten. Korrelationen der Bodenparameter zur Schadensausprägung wurden nicht gefunden, weder in der Summe über alle Standorte noch standortspezifisch. Eine signifikante Korrelation (r=0,42) konnte zwischen organischem C-Gehalt und der Populationsstruktur der Bodenpilze gefunden werden. Wird dieser Zusammenhang in die einzelnen Boniturstufen aufgeteilt, zeigt sich eine qualitative Wechselbeziehung: Die Boniturstufen 1-4 sind mit einer zusätzlichen Population C verbunden, die Boniturstufen 3-6 mit J und E und die Boniturstufen 5-6 mit M (die Buchstaben charakterisieren jeweils eine Populationsstruktur, die alphabetische Abfolge deren Ähnlichkeit zueinander). Boden unter vitalen Pflanzen enthält die Populationen F, A, H und G, die im Boden unter stark geschädigten Pflanzen (Boniturstufe 1-3) komplett fehlen.

Für die bakteriellen Populationen konnten solche Zusammenhänge nicht gefunden werden. Zusammenfassend lässt sich feststellen:
- Die strukturelle Zusammensetzung der pilzlichen Bodenpopulationen steht in einer mittelstarken Wechselbeziehung zum C_{org}-Gehalt des Bodens
- Der C_{org} Gehalt steht in keiner Wechselbeziehung zur Schadensausprägung
- Die Schadensausprägung ist qualitativ mit dem Vorkommen spezifischer pilzlicher Populationen verbunden, damit indirekt zum C_{org}-Gehalt des Bodens
- Die Schadensausprägung steht in keinem Zusammenhang zu physikalischen, chemischen oder mikrobiologischen Kennwerten

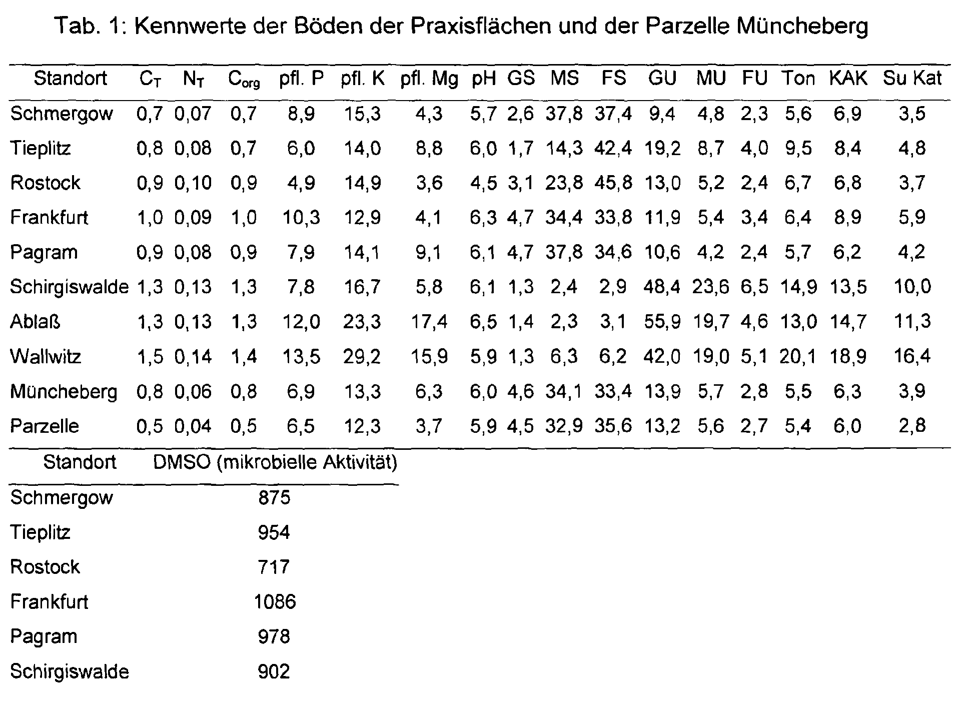

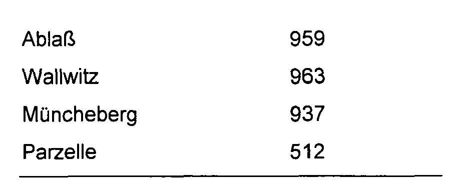

### 4. Klassifizierung von Subtypen von Verticillium

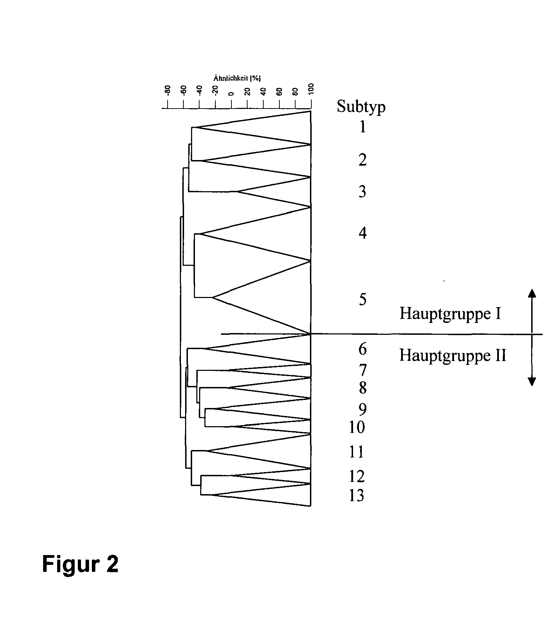

Die Besiedlung von vitalen und geschädigten Pflanzen mit dem pilzlichen Schaderreger *Verticillium* ist qualitativ und quantitativ unterschiedlich. Durch ein sensitives molekulargenetisches Monitoring der gewonnenen Pilzisolate konnte eine reproduzierbare Aufteilung der Art *V. dahliae* in genetische Subtypen durchgeführt werden. Dazu wurden die Isolate im ersten Schritt auf ihre Zugehörigkeit zur Art *Verticillium dahliae* genetisch geprüft. Das dafür aus Literatur- und Sequenzdaten adaptierte System basiert auf artspezifischen Sequenzunterschieden der ITS-Region der ribosomalen DNA, so dass die Arten *V.dahliae, V. tricorpus* und *V. albo-atrum* sicher unterscheidbar sind und sich auch von anderen *Verticillium* Arten abgrenzen, da diese kein PCR-Produkt liefern. Innerhalb der Art *Verticillium dahliae* wurden die Isolate durch eine RAPD-PCR mit einem Standardprimer weiter charakterisiert (Primerbindung: Temperatur 36°C, 40 Zyklen). Die molekulargenetischen Fingerprints der Subtypen wurden mittels Ähnlichkeitsanalyse 13 verschiedenen Subtypen in 2 Hauptgruppen zugeordnet (Figur 2 - Ähnlichkeitskoeffizient: Pearson Korrelation; Dendrogramm-Typ: Ward-Algorithmus; Optimierung: 0,60 %; Auswertebereich Fingerprints: 13,8 % bis 60,6 % der Gesamtlaufstrecke). Hierdurch war es möglich, die Besiedlung von vitalen und geschädigten Pflanzen in Bezug auf die genetischen Subtypen zu analysieren und einzelne Subtypen näher zu charakterisieren.

### 5. Pathogenität der Verticillium Subtypen in Abhängigkeit vom Klima

### 5.1 Schadensausprägung an Ausläuferpflanzen in sterilisiertem Boden

Im Spätherbst wurden Ausläuferpflanzen der Sorte 'Elsanta' aus einem Areal des Parzellenversuches Müncheberg entnommen. Das Versuchsareal unterlag keinerlei Behandlung und war eine mehrjährig schadensfreie Stelle. Durch eine Abdeckung mit Stroh im Frühherbst konnten solche Ausläufer entnommen werden, deren Wurzeln noch keinen Bodenkontakt hatten. Aus einem benachbarten Areal wurde Oberboden entnommen, und durch trockene Sterilisierung über mehrere Tage wurde die Bodenflora abgetötet. Mittels einer mehrstufigen und damit sensitiven PCR konnte keine *Verticillium* spezifische DNA nachgewiesen werden; ebenso führten 16S-und 18S-rDNA PCR zu keinem Nachweis von Bakterien/Pilz-DNA.

Der Versuch wurde in Pflanzgefäßen durchgeführt, die für jede Pflanze 340 g Boden enthielten. Die Gefäße hatten eine Höhe von 12 cm, so dass sich das Wurzelsystem der Erdbeere gut etablieren konnte. Die Pflanzen wurden nach einer Woche in der Klimakammer bonitiert, und solche mit mindestens 2 ausgebildeten Blättern und vitalem Vegetationskegel wurden genutzt. Die Wurzeln wurden gegebenenfalls auf eine Länge von 5 cm gekürzt.

Der Boden (340 g/Gefäß) wurde mit dem *Verticillium* Stroh-Präparat (2 g/Pflanze) vermischt und in Plastikbeutel gefüllt. Es wurden 32 *Verticillium* Subtypen verwendet, die vorher aus Praxis- und Parzellenpflanzen isoliert werden konnten. Diese Plastikbeutel wurden in der Klimakammer 1 Woche lang bebrütet, dann wurde dieses Substrat in die Gefäße um die Pflanzenwurzeln herum gefüllt und verfestigt. Mit den Daten der ersten Bonitur nach 22 Tagen wurde statistisch untersucht, inwieweit ein Einfluss durch die 2 Pflanz-Teams detektierbar war. Es konnten keinerlei Tendenzen oder Unterschiede gefunden werden, so dass der Versuch als eine Grundgesamtheit weiter analysierbar war. Nach 42 bis 48 Tagen blühten, unabhängig vom Klimaprogramm, alle Pflanzen. Die Blüten wurden entfernt, um die *Verticillium* Wirkung im vegetativen Stadium analysieren zu können.

Zwei baugleiche Klimakammern wurden für die unterschiedlichen Klimaprogramme genutzt. Ein Programm hatte über den Versuchszeitraum konstante Bedingungen, die dem langjährigem Mittel des Zeitraumes Ende April - Anfang Mai entspricht, im Folgenden als "Standard" bezeichnet (Tab. 2). Mit gleicher Lichtstärke wurde die Bodentemperatur des Jahres 2004 von Juni-August, jeweils als Monatsdurchschnitt, etabliert (Tab. 2). Das Jahr 2004 war in der Region Märkisch-Oderland im Vergleich zum langjährigen Monatsmittel der Lufttemperatur im Juni 4 K zu kalt; im Juli zum Mittel 0,5 K wärmer und im August 2,5 K wärmer. (Wetterdaten des DWD; 1961-1990; Stationen Lindenberg; Berlin-Buch und Frankfurt (Oder)).

Im Vergleich zum Standard wurde die Bodentemperatur bis "August" schrittweise um insgesamt 6,6 K am Tag und 9,3 K in der Nacht erhöht. Der Versuch wurde 10 Tage über Ende "August" weitergeführt. Eine weitere Entwicklung der Schadensausprägung wurde nicht mehr beobachtet, so dass der Versuch mit dieser Bonitur beendet wurde.

**Tab. 2: Klimakammerprogramm für Standardbedingungen und Klimabedingungen des Jahres 2004**

| | | Standard | | Klima 2004 | |
|---|---|---|---|---|---|
| | | Tag | Nacht | Tag | Nacht |
| "Juni 2004" | Bodentemp. | 15,8 | 12,3 | 17,5 | 12,4 |
| | Lufttemp. | 10,1 | 12,8 | 12,7 | 12,3 |
| "Juli 2004" | Bodentemp. | 15,3 | 12,3 | 20,6 | 20,5 |
| | Lufttemp. | 9,9 | 13,0 | 15,9 | 21,1 |
| "August 2004" | Bodentemp. | 14,9 | 12,2 | 21,5 | 21,5 |
| | Lufttemp. | 10,2 | 12,7 | 17,9 | 22,4 |

Die Vitalität der Erdbeerpflanzen war nach 50 Tagen bzw. Ende "Juni" im Versuch unter Standardbedingungen um eine Boniturstufe geringer als im

Versuch unter Klimanachführung. Die Bodentemperatur war im Versuch unter Klimanachführung am Tag 3 K höher, in der Nacht gleich. Die jeweils zwei Kontrollvarianten unterschieden sich entsprechend, so dass eine Normierung der Ergebnisse auf diese Kontrollen durchgeführt wurde. Damit sind die Versuche in Bezug zur Schadensausprägung durch die *Verticillium* Stämme untereinander vergleichbar.

Nach 50 Tagen bzw. Ende "Juni" waren bereits Pflanzen abgestorben, unter Standardbedingungen mehr als unter Klimanachführung. Nach weiteren 81 Tagen bzw. Ende "Juli" waren mehr Pflanzen unter Klimanachführung abgestorben als unter Standardbedingungen.

Im Mittel stellte sich die Schadensentwicklung innerhalb von 124 Tagen bzw. bis Ende "August"+10 Tage als abhängig vom Beimpfungsstamm und dessen Temperaturanpassung dar. Unter Standardbedingungen waren die Schäden nach 50 Tagen maximal, danach näherten sich die Schäden dem Kontrollniveau. Das deutet auf eine abnehmende Besiedlung oder Wirkung des Pilzes, da unter diesen Standardbedingungen die Vitalität der Kontrollpflanzen konstant blieb.

Demgegenüber war unter Klimanachführung das Maximum an Schäden Ende "August" erreicht, die Weiterführung des Versuches unter Augustbedingungen zeigte keine weitere Schädigung. Die vitalisierende Wirkung war entweder Ende "Juni", wie unter Standardbedingungen, am größten, blieb konstant oder erreichte das Kontrollniveau im Laufe des Versuches.

Unter kühleren Bedingungen wurden die Schäden nach 50 Tagen (Ende "Juni") maximal. Pflanzen, die diese Schädigung überlebten, konnten das Kontrollniveau nach 124 Tagen ("August"+10 Tage") erreichen.

Unter Klimabedingungen des Jahres 2004 traten die maximalen Schäden Ende "August" (114 Tage) in gleicher Größenordnung wie unter Standardbedingungen auf. Nach weiteren 10 Tagen blieben die Schäden konstant oder tendierten zu einer Abnahme.

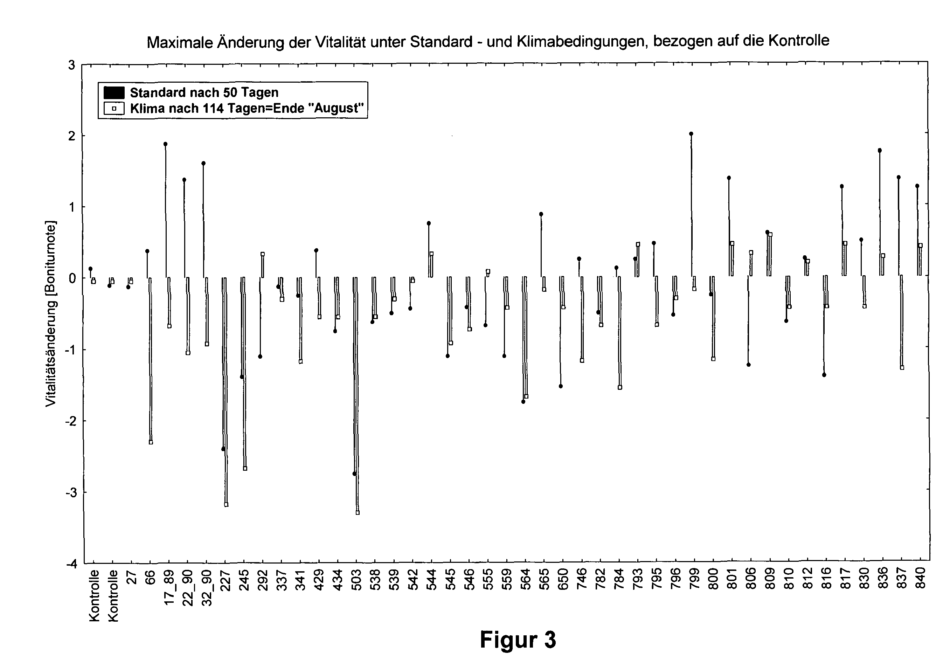

Das Ausmaß an Schäden war nicht primär witterungsabhängig, sondern abhängig von den Stämmen, die die Pflanze besiedelten (Figur 3).

Die stammspezifische Schadensausprägung lässt eine Gruppierung der Stämme in apathogene, temperaturunabhängig pathogene und temperaturabhängig pathogene zu. Dazu wurden die Maxima der Schäden nach 50 Tagen (Standard) mit den Schäden Ende "August" verglichen. Die Referenzstämme aus Dresden-Pillnitz, 17/89; 22/90 und 32/90 sind nur unter wärmeren Bodenbedingungen schädigend. Stämme der Praxisflächen und der Parzelle enthalten alle ökologischen Gruppen, wobei für 3 Standorte auf Grund der Stichprobenanzahl nicht alle Gruppen nachweisbar waren. Aus 2 Blattstielen einer stark geschädigten Pflanze (Boniturnote 3) wurde ein apathogener Stamm (544) in Kombination mit einem schwach pathogenen (546) in einem Stiel gefunden, in einem anderen Stiel derselben Pflanze ein hochpathogener Stamm (545).

Jeder Blattstängel kann durch andere Subtypen besiedelt sein, damit kann die Schadensausprägung stängelspezifisch sein, die Entfernung geschädigter Blattstängel ist somit von Vorteil.

Die statistische Absicherung der Ergebnisse wurde an Hand des Termins nach 124 Tagen bzw. Ende "August" durchgeführt. Eine signifikant vitalisierende Wirkung wurde unter Standardbedingungen, nicht unter Klimanachführung, an diesem Zeitpunkt statistisch gesichert. Die signifikanten Steigerungen der Vitalität unter Klimanachführung zum Ende "Juni" (z.B. 809) waren am Ende des Versuches nicht mehr nachweisbar.

Drei apathogene *Verticillium* Stämme (793, 801, 809) verfrühten die vegetative Pflanzenentwicklung.

Auf Grund des zunehmenden Absterbens von Pflanzen unter Klimanachführung wurde hier eine größere mittlere Schadensausprägung erreicht als unter Standardbedingungen, wo sich die Pflanzen nach 50 Tagen mit maximalem Schaden wieder erholen konnten bzw. nur in geringem Umfang weitere Pflanzen abstarben. So erscheint der Stamm 227 als einziger signifikant schädigend unter Standardbedingungen.

Zusammenfassend lässt sich feststellen, dass die Besiedlung von Erdbeerpflanzen mit *Verticillium* an sich noch kein schadensausprägender Fakt ist. Eine chemische Entseuchung kann zwar die Population ausrotten und darüber die Welke, stellt aber keine Notwendigkeit dar. Ebenso ist die Anzahl an Mikrosklerotien im Boden noch kein sicheres Anzeichen für die Schadenshäufigkeit. Jeder Blattstiel kann prinzipiell durch unterschiedliche *Verticillium* Stämme besiedelt sein, die sich in ihrer Pathogenität stark unterscheiden. Isolate aus stark geschädigten Pflanzen können somit auch apathogen sein, ebenso wie aus vitalen Pflanzen stark pathogene isolierbar sind. Dieses mikrobiologische Gleichgewicht in der Pflanze ist klimaabhängig.

Empfehlenswert ist es deshalb, möglichst unter kühlen Bedingungen zu pflanzen und bei Erwärmung sich entwickelnde Schäden durch Entfernung der betroffenen einzelnen Blattstängel zu minimieren. Pathogene Subtypen, auch Klima-unabhängige, sind durch Beimpfung mit apathogenen, möglichst in Kombinationen, bekämpfbar. Nach den Untersuchungen in den Praxisbetrieben muss man davon ausgehen, dass *Verticillium* als Population mit breiter ökologischer Anpassung im Boden vorhanden ist, selbst noch für weiterhin über langjährigen Mittelwerten liegende Temperaturen. Vor diesem Hintergrund ist der Einsatz von kalt-schädigenden, in diesem Sinne ökologisch reziproken, Stämmen sinnvoll.

### 5.2 Schadensausprägung und genetische Ähnlichkeit der Isolate

Die Analyse der Wechselbeziehungen zwischen genetischer Ähnlichkeit der Isolate und der Schadensausprägung unter verschiedenen Witterungsbedingungen zeigte folgende Ergebnisse: Die beiden genetischen Hauptgruppen (Figur 2) unterscheiden sich in ihrer Reaktion. In der Hauptgruppe I sind 55 % der getesteten Subtypen temperaturunabhängig (50 % apathogene), 28 % prägen Schäden unter kühlen Bedingungen und 17 % unter wärmeren Bedingungen aus. Bis auf eine Ausnahme wurden nur in dieser Hauptgruppe Subtypen gefunden, die unter kühleren Bedingungen Schäden verursachen. In der Hauptgruppe II sind 80 % der Isolate unabhängig von der Temperatur (40 % apathogene), die eine Ausnahme für kalt-schädigend ergibt 4 %, und 16 % sind unter wärmeren Bedingungen schädigend. Subtypen aus beiden genetischen Hauptgruppen kommen an den Standorten vor. Das Spektrum an *Verticillium* reicht damit an einem Standort von temperaturunabhängig bis zu temperaturabhängig schädigenden Stämmen und apathogenen.

Hieraus folgt auch, dass je nach Witterung jeweils andere Subtypen schädigen, was eine Bekämpfung auf der Grundlage biologischer Interaktionen mit mikrobiellen Präparaten sehr erschwert.

### 5.3 Vitalität von Meristem-vermehrten Erdbeerpflanzen

Aus 500 Meristem-vermehrten Erdbeerpflanzen (Fa. Häberli, CH), die aus der Pflanzgut-Produktionslinie für Europa entnommen wurden, sind für den Pflanzentest 460 Pflanzen selektiert worden. Diese hatten 2-3 Blätter und waren augenscheinlich ohne begleitende Mikroflora. Diese Pflanzen wurden einzeln in synthetischem Medium in Erlenmeyerkolben umgesetzt und in den Klimakammern unter den Standard/Witterungsbedingungen auf die Wirkung der zugesetzten *Verticillium* Stroh-Präparate getestet. Die Temperaturführung erfolgte durch Messfühler in den Erlenmeyerkolben.

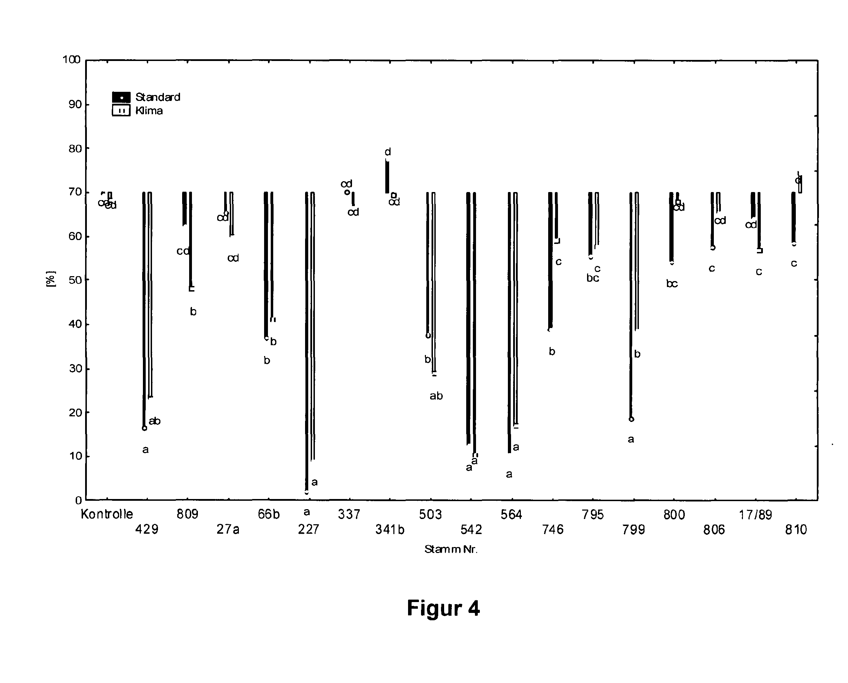

Nach 14 Tagen okkupierten die *Verticillium* Pilze die Pflanzenoberfläche, auch grüne Blätter, so dass nach weiteren 14 Tagen die Pflanzen vom Pilz überzogen und in pathogenen Varianten vollständig abgestorben waren. Für die Charakterisierung der Pathogenität der *Verticillium* Stämme wurde deshalb der Termin 14 Tage nach Beimpfung genutzt (Figur 4). Durch das vereinheitlichte Startniveau der Pflanzen konnte nach 14 Tagen der Anteil grüner Blätter als Vitalitätsmaß genutzt werden. Zur statistischen Absicherung wurden 2 unabhängige Kontrollen mitgeführt, deren Standort in der Klimakammer im ersten und letzten Drittel gewählt wurde. Die Schadensausprägung war stammspezifisch und teilweise klima-abhängig. Als klima-unabhängig hochpathogen sind die Stämme 429, 227, 542 und 546 aufgetreten, als pathogen die Stämme 503, 66b, als Klima-abhängig pathogen die Stämme 809, 746 und 799. Schwache, nicht signifikante Schäden verursachten die Stämme 27a, 337, 341 b, 795, 800, 806, 810 und 17/89.

Im Vergleich zum Test mit Ausläuferpflanzen wurde die apathogene Wirkung von 4 Stämmen (27a; 337; 795; 810) und die schwache bis starke Schädigung durch 5 Stämme (227; 503; 564; 806, 17/89) reproduziert. Die Klimaabhängigkeit der Schadensausprägung konnte in den 14 Tagen nur tendenziell bei den Meristem-vermehrten Pflanzen nachgewiesen werden: Isolat 806 bei Ausläuferpflanzen kalt-schädigend, bei Meristem-Pflanzen ebenfalls unter Standard tendenziell schwach, 17/89 unter Witterung schädigend, bei Meristem-Pflanzen schwach ausgeprägt. Für die Isolate 341, 429, 66b, 542, 746, 799, 800 und 809 ergaben sich widersprüchliche Ergebnisse, meistens für eine Klimavariante. Wahrscheinlich sind diese Isolate an einen Temperaturbereich zwischen den getesteten Temperaturen angepasst, so dass hier die mikroklimatischen Unterschiede zwischen dem offenen Pflanzensystem der Ausläuferpflanzen und dem geschlossenen in Erlenmeyerkolben für die Meristem-vermehrten Pflanzen entscheidend sein können.

### 5.4 Reproduzierbarkeit der Schadensausprägung

Die Bonitur der Schadensausprägung wurde im Versuch mit Ausläuferpflanzen visuell analog zu den Freilandbonituren nach Büttner (1985) durchgeführt. Parallel dazu wurde die Anzahl grüner Blätter je Pflanze gezählt. Diese Aufnahmen sind zu 3 Terminen erfolgt, die dem Klimaverlauf von Juni, Juli und August entsprachen. Im Vergleich dazu wurde der Test mit Meristem-vermehrten Pflanzen ebenfalls zum "Juni" und "Juli" bonitiert. Hier war eine Bonitur nach Büttner (1985) nicht sinnvoll, sondern es wurde die Anzahl grüner und vergilbter Blätter bestimmt. Durch das Überwuchern der Blätter durch die *Verticillium* Pilze nach dem "Juni"-Termin wurde der Test zum "Juli"-Termin beendet. Offensichtlich führte das Überwuchern zum unspezifischen Absterben der Pflanzen, wahrscheinlich aus Lichtmangel der überwucherten Blätter.

Aufgrund dieser verschiedenen Pflanzenstadien und Klimastadien war eine gleichgerichtete, reproduzierte Schadensausprägung eher unwahrscheinlich. Dies traf tatsächlich für 2 Isolate zu: 429 und 542. Beide waren mit Ausläuferpflanzen unabhängig vom Klima ohne Schäden, führten aber bei Meristem-vermehrten Pflanzen zu starken Schäden (Tab. 3).

Unter Standardbedingungen zeigten 2 Stämme unterschiedliches Verhalten: 66b und 799 verursachten bei Meristem-vermehrten Pflanzen mittlere bzw. starke Schäden, bei Ausläuferpflanzen keine. Die Stämme 800 und 809 führten unter Klimabedingungen von 2004 zu unterschiedlichen Schädigungen: schwache Schäden bei Ausläuferpflanzen gegenüber keinen Schäden bei Meristem-vermehrten Pflanzen; keine Schäden bei Ausläuferpflanzen gegenüber mittleren Schäden bei Meristem-vermehrten Pflanzen. Reproduziert wurde die apathogene Wirkung von 6 Stämmen (27a; 337; 341; 795; 810; 17/89) und die schwache bis starke Schädigung durch 5 Stämme (227; 503; 564; 746; 806).

Beide Testverfahren unterscheiden apathogene von pathogenen Stämmen reproduzierbar.

Der Test mit Meristem-vermehrten Pflanzen ergibt diese Resultate in 14 Tagen gegenüber 4 Monaten mit Ausläuferpflanzen.

Ergebnisunterschiede zwischen den Tests können an der mikrobiellen Besiedlung in der Pflanze und an der Pflanzengröße liegen. Die Unterschiede sind so gerichtet, dass im Test mit Meristem-vermehrten Pflanzen Schäden auftreten, im anderen Test aber nicht.

Im Test mit Meristem-vermehrten Pflanzen wurde ebenfalls Mykorrhiza zu den Stämmen 429 und 809 appliziert. In Kombination mit dem Stamm 429 waren die Pflanzen 20 % schlechter, in Kombination mit 809 unverändert; diese Verhältnisse wurden im Ausläuferpflanzen-Test ebenso beobachtet.

Die Isolate aus Pflanzen anderer Erdbeersorten, wie Stamm 800 aus 'Korona'(Boniturnote 9); die Stämme 292 (Boniturnote 3), 810 und 840 aus 'Symphonie' (Boniturnote 9) und Stamm 793 aus 'Yamaska' (Boniturnote 9) führten an 'Elsanta' zu unterschiedlichen Schäden. Nur die Stämme 840 aus 'Symphonie' und 793 aus 'Yamaska' waren an 'Elsanta' ebenfalls apathogen. Eine Nachpflanzung von 'Elsanta' auf vitale 'Symphonie'- oder 'Korona'- Bestände unter der Annahme "Anreicherung apathogener *Verticillium* Stämme" garantiert keinesfalls vitale 'Elsanta'-Pflanzen.

**Tab. 3: Reproduzierbarkeit des Schadenspotentials der Verticillium Stämme an Ausläufer-Pflanzen und Meristem-vermehrten Pflanzen**

| | *Ausläuferpflanzen* | | Meristem-vermehrte Pflanzen | | |
|---|---|---|---|---|---|
| | *Standard* | *Klima 2004* | *Standard* | *Klima 2004* | *Schädigung* |
| *Kontrolle* | *0* | *0* | *0* | *0* | |
| *27a* | *0* | *0* | *0* | *0* | *0* |
| *66b* | *0* | *Schaden* | *Schaden* | *Schaden* | - |
| *227* | *Schaden* | *Schaden* | *Schaden* | *Schaden* | *generell* |
| *337* | *0* | *0* | *0* | *0* | *0* |
| *341* | *0* | *schwach→0* | *0* | *0* | *0* |
| *429* | *0* | *0* | *Schaden* | *Schaden* | - |
| *503* | *Schaden* | *Schaden* | *Schaden* | *Schaden* | *generell* |
| *542* | *0* | *0* | *Schaden* | *Schaden* | - |
| *564* | *Schaden* | *Schaden* | *Schaden* | *Schaden* | *generell* |
| *746* | *0* | *schwach→0* | *schwach* | *schwach→0* | *schwach* |
| *795* | *schwach→0* | *schwach→0* | *schwach→0* | *schwach→0* | *0* |
| *799* | *0* | *0→schwach* | *Schaden* | *Schaden* | - |
| *800* | *0* | *schwach* | *schwach→0* | *0* | - |
| *806* | *schwach* | *0* | *schwach* | *0* | *schwach kalt* |
| *809* | *0* | *0* | *0* | *Mittel* | - |
| *810* | *schwach→0* | *0* | *schwach→0* | *0* | *0* |
| *17*/*89* | *0* | *schwach→0* | *0* | *schwach→0* | *0* |

### 6. Parzellen Exaktversuche

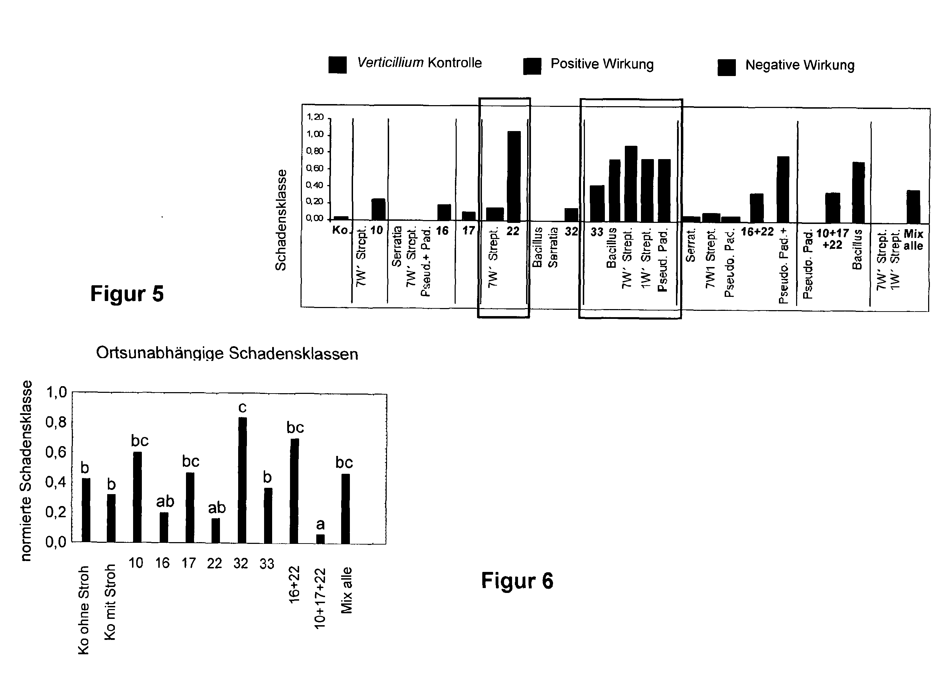

Die Kombination zwischen verschiedenen *Verticillium* Stämmen und bakteriellen Präparaten, die als vitalitätsfördernd am Markt sind und solchen, die antagonistisch wirksam sind, zeigen im Parzellenversuch sehr enge Wechselbeziehungen (Figur 5). Beispielsweise wirkt das bakterielle Präparat 7W (HRO-7W1) schadensvermindernd in Varianten, die mit dem *Verticillium* Stamm 16 beimpft wurden. In Kombination mit dem *Verticillium* Stamm 33 verstärkt sich der Schaden um das Doppelte durch den Einsatz von 7W.

In einem weiteren Versuch wurde die Kombinationswirkung verschiedener *Verticillium* Stämme auf die Schadensentwicklung bei Erdbeerpflanzen analysiert. Die Beimpfung mit einzelnen und verschiedenen Mixturen von *Verticillium* Stämmen ergab überraschender Weise keine Verstärkung des Schadens durch diese Mixturen, sondern bei einer spezifischen Kombination (Stamm 10+17+22) eine signifikante Halbierung der Schäden (Figur 6), obwohl die Stämme 10 und 17 einzeln beimpft die Schäden verstärken. Hier zeigt sich weiterhin, dass es möglich ist, die Schadensausprägung, die durch unbekannte *Verticillium* Stämme im Boden bedingt ist, durch gezielte Beimpfung mit selektierten *Verticillium* Stämmen stark zu reduzieren.

## Patentansprüche

1. Zusammensetzung zur Reduktion und/oder Verhinderung von durch *Verticillium* sp. verursachten Schäden an einer Pflanze, wobei die Zusammensetzung als aktiven Bestandteil eine wirksame Menge an *Verticillium* sp. aufweist und *Verticillium* sp. ein apathogener Stamm und ein temperaturabhängig pathogener Stamm ist und wobei mindestens 2 *Verticillium* Stämme kombiniert werden.

2. Zusammensetzung nach Anspruch 1, wobei für Standorte mit einer mittleren Bodentemperatur kleiner als ca. 15 °C mindestens ein temperaturabhängig pathogener *Verticillium* Stamm gewählt wird, der bei niedrigen Temperaturen apathogen und bei höheren Temperaturen pathogen ist.

3. Zusammensetzung nach Anspruch 1, wobei für Standorte mit einer mittleren Bodentemperatur von ca. 15°C bis ca. 21°C mindestens ein temperaturabhängig pathogener *Verticillium* Stamm gewählt wird, der bei niedrigen Temperaturen pathogen und bei höheren Temperaturen apathogen ist.

4. Zusammensetzung nach einem der vorhergehenden Ansprüche, wobei *Verticillium* sp. ausgewählt ist aus den Isolaten Nr. 806 (Hinterlegungsnummer: DSM 17662), 784 (Hinterlegungsnummer: DSM 17661) und 337 (Hinterlegungsnummer: DSM 17660).

5. Zusammensetzung nach einem der vorhergehenden Ansprüche, wobei die Zusammensetzung pflanzlich verträgliche Träger- und/oder Hilfsstoffe, insbesondere Stroh enthält.

6. Zusammensetzung nach Anspruch 5, wobei das Stroh vor der Verwendung autoklaviert wird.

7. Zusammensetzung nach einem der vorhergehenden Ansprüche, wobei die wirksame Menge ca. 5 g Stroh-Inokulum pro Pffanzloch bei der Pflanzung pro Pflanze beträgt.

8. Zusammensetzung nach einem der Ansprüche 1 bis 6, wobei die wirksame Menge ca. 135 g Stroh-Inokulum je m² und ca. 10 cm Einfrästiefe bei Flächenimpfung vor der Pflanzung beträgt.

9. Zusammensetzung nach einem der vorhergehenden Ansprüche, wobei die Pflanze eine Nutzpflanze, insbesondere Erdbeere, Raps, Aubergine, Paprika, Tomate, Olive, Gurke, Baumwolle, Kartoffel, Minze, Luzerne und/oder Hopfen ist.

10. Zusammensetzung nach einem der Ansprüche 1 bis 8, wobei die Pflanze ein Ziergehölz oder Forstgehölz, insbesondere Feld-Ahorn (lat. Acer campestre), Spitz-Ahorn (lat. Acer platanoides), Berg-Ahorn (lat. Acer pseudoplatanus), Trompetenbaum (lat. Catalpa bignonioides), Perückenstrauch (lat. Cotinus coggygria), falsche Akazie bzw. Robinie (lat. Robinia pseudoacacia), Hundsrose (lat. Rosa canina), Flieder (lat. Syringa vulgaris) und/oder Linde (lat. Tilia cordata) ist.

11. Verfahren zur Reduktion und/oder Verhinderung von durch *Verticillium* sp. verursachten Schäden an einer Pflanze, umfassend
a) Bestimmen der mittleren Bodentemperatur;
b) Auswählen einer Zusammensetzung enthaltend mindestens einen apathogenen und mindestens einen temperaturabhängig pathogenen Stamm von *Verticillium* sp. in Abhängigkeit von der mittleren Bodentemperatur;
c) Aufbringen der Zusammensetzung auf zu behandelndes pflanzliches Material; und gegebenenfalls
d) Ausbringen des inokulierten pflanzlichen Materials.

12. Verfahren nach Anspruch 11, wobei das pflanzliche Material ausgewählt ist aus der Gruppe bestehend aus Saatgut, Setzlingen, Stecklingen, Keimlingen, Meristem-vermehrtem Pflanzgut, adulten Pflanzen und Pflanzen aus in vitro Gewebekultur.

13. Verwendung von *Verticillium* sp. zur Reduktion und/oder Verminderung von durch *Verlicillium* sp. verursachten Schäden an einer Pflanze,
wobei mindestens ein apathogener Stamm und mindestens ein temperaturabhängig pathogener Stamm kombiniert werden.

## Claims

1. Composition for reducing and/or preventing damage to a plant caused by *Verticillium* sp., the composition having as an active component an effective quantity of *Verticillium* sp., and *Verticillium* sp. being an apathogenic strain and a temperature-dependently pathogenic strain and at least two *Verticillium* strains being combined.

2. Composition according to claim 1, wherein there is selected for locations having a mean ground temperature of less than approximately 15ºC at least one temperaturedependently pathogenic *Verticillium* strain which is apathogenic at low temperatures and pathogenic at higher temperatures.

3. Composition according to claim 1, wherein there is selected for locations having a mean ground temperature of from approximately 15ºC to approximately 21ºC at least one temperature-dependently pathogenic *Verticillium* strain which is pathogenic at low temperatures and apathogenic at higher temperatures.

4. Composition according to any one of the preceding claims, wherein *Verticillium* sp. is selected from the isolates No. 806 (accession number: DSM 17662), 784 (accession number: DSM 17661) and 337 (accession number: DSM 17660).

5. Composition according to any one of the preceding claims, wherein the composition contains plant-tolerant carrier and/or auxiliary substances, in particular straw.

6. Composition according to claim 5, wherein the straw is autoclaved before use.

7. Composition according to any one of the preceding claims, wherein the effective quantity is approximately 5 g of straw inoculum per plant hole when planting per plant.

8. Composition according to any one of claims 1 to 6, wherein the effective quantity is approximately 135 g of straw inoculum per m² and approximately 10 cm cutting depth during surface inoculation prior to planting.

9. Composition according to any one of the preceding claims, wherein the plant is a useful plant, in particular strawberry, rapeseed, aubergine, pepper, tomato, olive, cucumber, cotton, potato, mint, lucerne and/or hops.

10. Composition according to any one of claims 1 to 8, wherein the plant is an ornamental tree or a forest tree, in particular field maple (lat. Acer campestre), Norway maple (lat. Acer platanoides), sycamore maple (lat. Acer pseudoplatanus), Indian bean tree (lat. Catalpa bignonioides), wig shrub (lat. Cotinus coggygria), false acacia or robinie (lat. Robinia pseudo-acacia), dog rose (lat. Rosa canina), lilac (lat. Syringa vulgaris) and/or lime (lat. Tilia cordata).

11. Method for reducing and/or preventing damage to a plant caused by *Verticillium* sp., comprising
a) determining the mean ground temperature;
b) selecting a composition containing at least one apathogenic and at least one temperature-dependently pathogenic strain of *Verticillium* sp. in accordance with the mean ground temperature;
c) applying the composition to plant material to be treated; and where applicable
d) distributing the inoculated plant material.

12. Method according to claim 11, wherein the plant material is selected from the group consisting of seeds, seedlings, cuttings, germ buds, seed stock with added meristem, adult plants and plants from in vitro tissue culture.

13. Use of *Verticillium* sp. for reducing and/or preventing damage to a plant caused by *Verticillium* sp., wherein at least one apathogenic strain and at least one temperature-dependently pathogenic strain are combined.

## Revendications

1. Composition destinée à réduire et/ou empêcher des dommages causés à une plante par *Verticillium* sp., la composition comportant comme composant actif une quantité efficace de *Verticillium* sp. et *Verticillium* sp. étant une souche apathogène et une souche pathogène en fonction de la température et au moins 2 souches de *Verticillium* étant associées.

2. Composition selon la revendication 1, dans laquelle pour des sites ayant une température moyenne du sol inférieure à environ 15 °C on choisit au moins une souche de *Verticillium* pathogène en fonction de la température, qui est apathogène à basses températures et pathogène à des températures plus élevées.

3. Composition selon la revendication 1, dans laquelle pour des sites ayant une température moyenne du sol d'environ 15 °C à environ 21 °C on choisit au moins une souche de *Verticillium* pathogène en fonction de la température, qui est pathogène à basses températures et apathogène à des températures plus élevées.

4. Composition selon l'une quelconque des revendications précédentes, dans laquelle *Verticillium* sp. est choisi parmi les isolats n° 806 (numéro de dépôt : DSM 17662), 784 (numéro de dépôt : DSM 17661) et 337 (numéro de dépôt : DSM 17660).

5. Composition selon l'une quelconque des revendications précédentes, la composition contenant des matières de support et/ou adjuvants tolérés par les plantes, en particulier de la paille.

6. Composition selon la revendication 5, dans laquelle avant l'emploi on passe la paille à l'autoclave.

7. Composition selon l'une quelconque des revendications précédentes, dans laquelle la quantité efficace est d'environ 5 g d'inoculum-paille par trou de plantation lors de la plantation par plante.

8. Composition selon l'une quelconque des revendications 1 à 6, dans laquelle la quantité efficace est d'environ 135 g d'inoculum-paille par m² et à une profondeur de fraisage d'environ 10 cm dans l'ensemencement de la surface avant la plantation.

9. Composition selon l'une quelconque des revendications précédentes, dans laquelle la plante est une plante utile, en particulier le fraisier, le colza, l'aubergine, le poivron, la tomate, l'olivier, le concombre, le coton, la pomme de terre, la menthe, la luzerne et/ou le houblon.

10. Composition selon l'une quelconque des revendications 1 à 8, dans laquelle la plante est une plante ornementale ou une plante forestière, en particulier l'érable champêtre (latin *Acer campestre*), l'érable plane (latin *Acer platanoides*), l'érable sycomore (latin *Acer pseudoplatanus*), le catalpa (latin *Catalpa bignonioides*), l'arbre à perruques (latin *Cotinus coggygria*), le robinier ou faux acacia (latin *Robinia pseudoacacia*), le rosier des chiens (latin *Rosa canina*), le lilas (latin *Syringa vulgaris*) et/ou le tilleul (latin *Tilia cordata*)*.*

11. Procédé pour réduire et/ou empêcher des dommages causés à une plante par *Verticillium* sp., comprenant
a) la détermination de la température moyenne du sol ;
b) le choix, en fonction de la température moyenne du sol, d'une composition contenant au moins une souche de *Verticillium* sp. apathogène et au moins une souche de *Verticillium* sp. pathogène en fonction de la température ;
c) l'application de la composition sur le matériel végétal à traiter ; et éventuellement
d) l'épandage du matériel végétal inoculé.

12. Procédé selon la revendication 11, dans lequel le matériel végétal est choisi dans le groupe constitué par des semences, des plants, des boutures, des plantules, un matériel végétal multiplié à partir de méristème, des plantes adultes et des plantes provenant d'une culture de tissu in vitro.

13. Utilisation de *Verticillium* sp. pour réduire et/ou empêcher des dommages causés à une plante par *Verticillium* sp.,
dans laquelle on associe au moins une souche apathogène et au moins une souche pathogène en fonction de la température.
